# EUROPEAN PATENT APPLICATION

(11) **EP 1 136 356 A2**
(43) Date of publication of application: **26.09.2001**
(21) Application number: 01301911.2
(22) Date of filing: 02.03.2001
(51) Int. Cl.: B64G 1/26

(54) **Sequencer and method for automating a series of satellite orbit-keeping maneuvers**

(30) Priority: 20.03.2000 US 531704
(71) Applicant: Space Systems / Loral, Inc., Palo Alto, California 94303 (US)
(72) Inventor: Higham, John S., Mountain View, California 94040 (US); Schwarz, Robert, Centreville, Virginia 20120 (US)
(74) Representative: Greene, Simon Kenneth

(57) **Abstract**

A sequencer and method that characterize a series of orbit-keeping burns and that automatically implement a series of satellite orbit-keeping maneuvers. Parameters are defined and stored in the sequencer such as burn time, burn direction, thruster selection, and burn duration for each thruster to achieve each desired maneuver. The sequencer and method automatically sequences through the series of orbit-keeping burns by determining the burn time, burn direction, and burn duration for each thruster required to achieve a particular maneuver and activating the required thrusters to perform their required burns. As long as the series of orbit-keeping burns is uninterrupted, orbit-keeping proceeds unaided by ground operators.

## Description

The present invention relates to satellites, and more particularly to a sequencer and method for use on a satellite that defines and automates a series of satellite orbit-keeping maneuvers.

Orbit keeping is required for virtually all satellite applications. Heritage satellites developed by the assignee of the present invention require ground operators to be present that send commands to an orbiting satellite to begin each orbit-keeping maneuver. Recently deployed satellites require orbit-keeping maneuvers that are much smaller in magnitude, and are much more frequent, leading to an increased level of automation. It would be advantageous to have apparatus that enables satellite automation while minimizing the amount of initial set-up.

Heritage satellites developed by the assignee of the present invention have used a sequencer to define the starting time and duration of one burn. Also, heritage satellites developed by the assignee of the present invention, and most other satellite manufacturers, use time tag commanding to define future events.

Typically, orbit-keeping maneuvers have been performed using manual ground commanding. On occasion, orbit keeping maneuvers were performed using a sequencer that defined the start time and maneuver duration of a single burn, while other configurations, such as maneuver direction, were performed by ground operators on a case by case basis. It would be advantageous to have apparatus that eliminates tedious ground operator efforts and automates satellite orbit-keeping maneuvers.

Accordingly, it would be advantageous to have an improved sequencer and method that is used to define and automate a series of satellite orbit-keeping maneuvers.

The present invention provides for a sequencer and method that allow a series of orbit-keeping burns to be defined in advance with a minimum amount of initial set up. Once programmed, the sequencer and method may be used to automatically implement a series of satellite orbit-keeping maneuvers. A number of predetermined parameters are defined that include the burn time, burn direction, and burn duration for each thruster to achieve each desired maneuver. These predetermined parameters are stored in the sequencer. Other setup parameters, such as thruster selection, are determined once and are stored in the sequencer.

The sequencer and method automatically sequences through the series of orbit-keeping burns by determining the burn time, burn direction, and burn duration for each thruster required to achieve a particular maneuver and activating the required thrusters to perform their required burns. The sequencer and method define a finite number of individual maneuvers, which in order to be useful should be at least several days worth of maneuvers. The sequencer and method is periodically refreshed and updated such that inter and intra-day maneuvers can proceed uninterrupted. As long as the sequencer and method is periodically refreshed the series of orbit-keeping burns is uninterrupted and orbit-keeping proceeds unaided by ground operators. Interruption may occur due to satellite-based or ground-based fault detection at which time ground operators may reinitialize the sequencer or method.

The various features and advantages of the present invention may be more readily understood with reference to the following detailed description taken in conjunction with the accompanying drawings, described by way of example, wherein like reference numerals designate like structural elements, and in which:

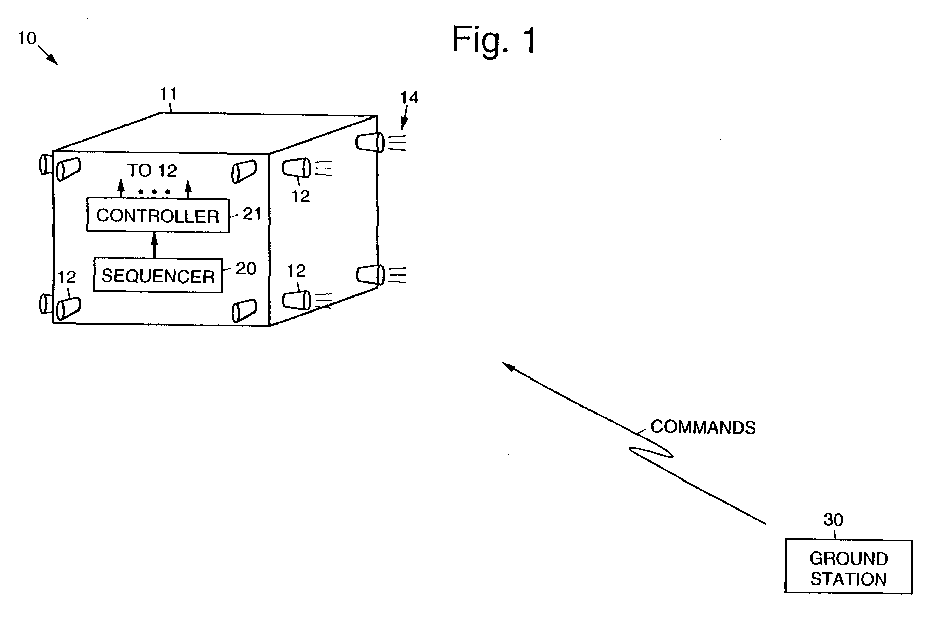

Fig. 1 illustrates an exemplary sequencer in accordance with the principles of the present invention; and
Fig. 2 is a flow diagram illustrating an exemplary control method in accordance with the principles of the present invention.

Referring to the drawing figure, it illustrates an exemplary sequencer 20 in accordance with the principles of the present invention. The sequencer 20 is disposed on an orbiting satellite 10 and is used to control thrusters 12 disposed on the satellite body 11 to produce orbit-keeping Δv burns 14 that change the orbit of the satellite 20 and thus implement satellite orbit-keeping maneuvers.

The present invention minimizes commanding from a ground station 30 that defines the orbit-keeping Δv burns 14 produced by the thrusters 12 on the orbiting satellite 10. Conventionally, heritage analysis and planning software (APS) developed by the assignee of the present invention and used at a ground control station 30 outputs the time of the start of the burn, burn duration, and type (east, west, north or south) of burn. The analysis and planning software uses knowledge of various parameters such as the direction each thruster 12 is pointed, the mass of the satellite 10, and the force each thruster 12 develops, for example. These variables or parameters are typically set once per program, or in the case of mass, change very slowly, and in a well-defined manner.

What changes for each burn includes the start time, the burn duration, and direction of the imparted Δ*ν* burn 14 which is defined by the proper selection of the thrusters 12. These parameters are uploaded to the satellite 10 from a ground control station 30. These three parameters are typically broken down into detailed commands. For example, in the past, to perform a "west" burn, operators at the ground control station would enable four thrusters 12 on the east face of the satellite 10. Then, the operators would break the duration of the west pulse into roughly four equal parts, one for each of the four thrusters 12. If the resulting duration was still too long to be performed by firing each of the four pulses simultaneously, then it would be broken into smaller and smaller pieces.

The four equal parts may be altered somewhat so that the overall force vector passes through the center of mass of the satellite 10. Each thruster 12 would then be commanded with a different on-time, and a conventional sequencer would be programmed to fire at a specific time, and if a series of pulses were required the conventional sequencer would be programmed to fire pulses at specified intervals. All of this meant significant process time at the ground station 30 to have the operator take the information about the burn from the analysis and planning software and break it up into a command sequence that the satellite 10 could perform. This resulted in a significant amount of commanding for each orbit-keeping maneuver that was to be performed.

In contrast to this conventional approach, the present sequencer 20 is used to configure the satellite 10 ahead of time with most of the required information, requiring only uploading of the above-mentioned three parameters to complete the information needed to perform an orbit-keeping burn.

Prior to launch of the satellite 10, the controller 21 is configured with data that indicates which thrusters 12 need to be fired, and in what proportion, to perform north, south, east or west orbit-keeping maneuvers. On a satellite 10 developed by the assignee of the present invention, for example, this may be done using a SmartPulse™ controller or control method, which is disclosed in copending US Patent Application Serial No. 09/517,032, filed March 2, 2000, entitled "Controller and Control Method for Satellite Orbit Keeping" assigned to the assignee of the present invention, which describes one way to configure the satellite 10 ahead of time. The contents of this patent application are incorporated herein by reference in their entirety. A corresponding European application is being filed on the same day as the present application.

On the satellite 10, for example, above-mentioned three parameters for each of the maneuvers may are uplinked to the satellite 10. The sequencer 20 stores information for 32 separate orbit keeping maneuvers. This represents about 8 days worth of orbit keeping maneuvers (one north, one south, one east and one west, every day for eight days as a baseline guide). The ground-based analysis and planning software keeps the sequencer 20 current in a never-ending cycle of updates. The memory allocation for the sequencer 20 is represented in Table 1.

As is shown in Table 1, there are three primary variables that are required for each maneuver. The first of these is maneuver type. There are only four types of maneuvers; East, West, North and South. Each of these maneuver types are represented as a script or macro that is coded into the controller in accordance with the teachings of US Patent Application Serial No. 09/517,032 cited above for East and West maneuvers, and in accordance with the teachings of US Patent No. 5,349,532 entitled "Spacecraft Attitude Control and Momentum Unloading Using Gimballed and Throttled Thrusters" assigned to the assignee of the present invention.

The second of the three primary variables, start time, is stored as a time-tagged command. It is common for satellites to have the capacity to execute commands by specifying a time in advance for a specific command to be executed. What is different in this case is that time-tagged command is initiating a series f commands, or macro. It is of course imperative that the time-tag command execute the appropriate sequence in order to realize the correct maneuver (North, South, East or West).

The remaining piece of information is the duration. This is stored in a look-up table, represented as Table 1. As the time-tag command executes the appropriate TYPE (implemented as a sequence or macro) at the appropriate START TIME the appropriate DURATION is passed to the sequence being called by TYPE. An important aspect of the present invention is to manage the information that makes up each individual daily maneuver as represented in Table 1 and that it is indexed with its own unique TYPE, START TIME and DURATION.

As noted above the ground-based analysis and planning software keeps the sequencer 20 current in a never-ending cycle of updates. The period of the update must be less than the 8 day capacity of the sequencer. This updating process may be automated in accordance with the teachings of US Patent Application Serial No. _, filed _, entitled "Automated Orbit Compensation System and Method", assigned to the assignee of the present invention.

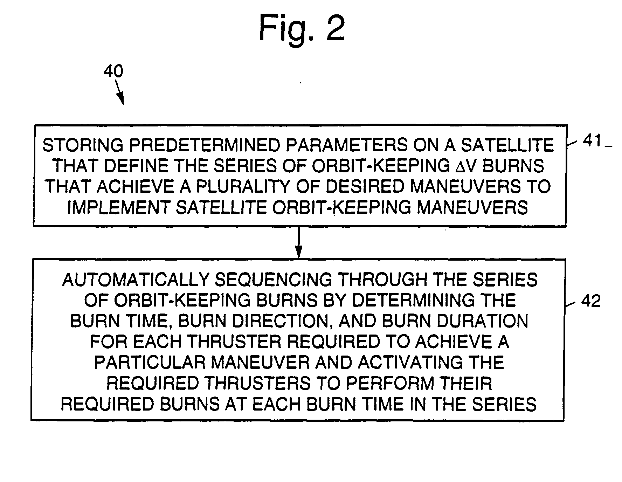

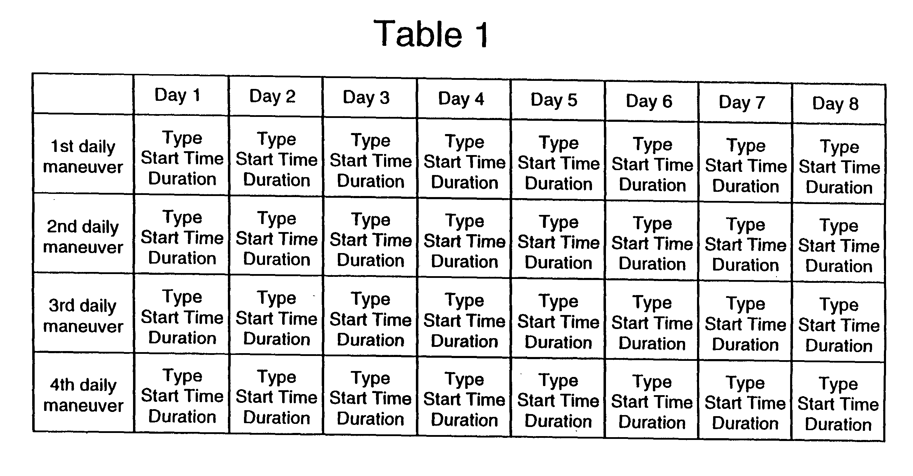

A method 40 of controlling orbit-keeping maneuvers of a satellite 10 having a plurality of thrusters 12 is also provided by the present invention. A flow diagram for an exemplary method 40 is illustrated in Fig. 2. The exemplary method 40 comprises the following steps.

Predetermined parameters including burn time, burn direction, and burn duration for each thruster that define the series of orbit-keeping Δv burns 14 that achieve a plurality of desired maneuvers to implement satellite orbit-keeping maneuvers are stored 41 on the satellite 10, such as in a sequencer 20. The series of orbit-keeping burns is automatically sequenced through 42 by determining the burn time, burn direction, and burn duration for each thruster required to achieve a particular maneuver and activating the required thrusters to perform their required burns at each burn time in the series.

Thus, an improved sequencer and method that may be used to define and automate a series of satellite orbit-keeping maneuvers has been disclosed. It is to be understood that the described embodiment is merely illustrative of some of the many specific embodiments that represent applications of the principles of the present invention. Clearly, numerous and other arrangements can be readily devised by those skilled in the art without departing from the scope of the invention.

## Claims

1. Apparatus for use on an orbiting satellite that controls a plurality of thrusters to produce a series of orbit-keeping Δv burns that change the orbit of the satellite to implement satellite orbit-keeping maneuvers, comprising:
a sequencer that stores predetermined parameters that define the series of orbit-keeping Δv burns that achieve each desired maneuver, and that automatically sequences through the series of orbit-keeping burns by determining the burn time, burn direction, and burn duration for each thruster required to achieve a particular maneuver and activating the required thrusters to perform their required burns at each burn time in the series.

2. The apparatus recited in Claim 1 wherein the predetermined parameters include burn time, burn direction, and burn duration for each thruster.

3. A satellite, comprising
a plurality of thrusters; and
a sequencer according to claim 1 or 2 for controlling the thrusters.

4. A method of controlling orbit-keeping maneuvers of a satellite having a plurality of thrusters, comprising the steps of:
storing predetermined parameters on the satellite 10 that define the series of orbit-keeping Δv bums that achieve a plurality of desired maneuvers to implement satellite orbit-keeping maneuvers; and
automatically sequencing through the series of orbit-keeping burns by determining the burn time, burn direction, and burn duration for each thruster required to achieve a particular maneuver and activating the required thrusters to perform their required burns at each burn time in the series.

5. The method recited in Claim 4 wherein the predetermined parameters are store in a sequencer.

6. The method recited in Claim 4 or 5 wherein the predetermined parameters include burn time, burn direction, and burn duration for each thruster.

7. The method recited in any of claims 4 to 6 wherein the predetermined parameters include burn time, burn direction, and burn duration for each thruster.
